# EUROPEAN PATENT SPECIFICATION

(11) **EP 4 407 770 B1**
(45) Date of publication and mention of the grant of the patent: **22.04.2026**
(21) Application number: 23807873.7
(22) Date of filing: 16.05.2023
(51) Int. Cl.: H01M 50/242, H01M 50/204, H01M 50/264, H01M 50/209, H01M 50/289

(54) **BATTERY PACK**
BATTERIEPACK
BLOC-BATTERIE

(30) Priority: 16.05.2022 KR 20220059860
(43) Date of publication of application: 31.07.2024
(60) Divisional application: 26160429.2
(73) Proprietor: LG Energy Solution, Ltd., Seoul 07335 (KR)
(72) Inventor: LEE, Jae Hyun, Daejeon 34122 (KR); SHIN, Ju Hwan, Daejeon 34122 (KR); LEE, Hyoung Suk, Daejeon 34122 (KR)
(74) Representative: Plasseraud IP
(86) International application number: PCT/KR2023/006608
(87) International publication number: WO 2023/224354

(56) References cited:
- EP-A1- 3 570 365
- EP-A1- 3 907 777
- CN-A- 110 959 203
- DE-A1- 102018 210 126
- DE-A1- 102018 210 126
- JP-A- 2018 156 825
- KR-A- 20180 113 906
- KR-A- 20220 014 027
- KR-B1- 101 066 235
- US-A1- 2018 272 853
- US-A1- 2020 384 882

## Description

### [Technical Field]

The present invention relates to a battery pack.

### [Background Art]

Types of secondary batteries include lithium ion batteries, lithium polymer batteries, nickel cadmium batteries, nickel hydrogen batteries, and nickel zinc batteries. An operating voltage of these unit secondary battery cells, that is, unit battery cells, is in a range of about 2.5 V to 4.2 V. Thus, when a higher output voltage is required, a battery pack is formed by connecting a plurality of battery cells in series. Further, a battery pack may be formed by connecting a plurality of battery cells in parallel according to a charging/discharging capacity required for the battery pack. Thus, the number of battery cells included in the battery pack may be variously set according to a required output voltage and a required charging/discharging capacity.

For example, when a battery pack is formed by connecting a plurality of battery cells in series or parallel, a battery module including a plurality of battery cells is first formed.

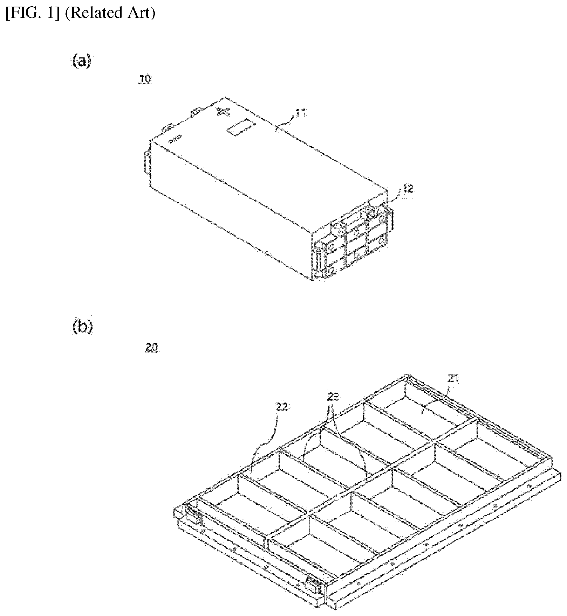

FIG. 1 is a view illustrating a commonly used battery module 10 and a pack case 20 included in a battery pack in which the battery module 10 is accommodated.

Specifically, (a) of FIG. 1 is a view illustrating one type of the battery module 10. As illustrated, the battery module 10 according to the related art has a shape in which the battery module 10 has end plates 12 coupled to front and rear sides thereof and side surfaces thereof are surrounded and protected by a module frame 11. In recent years, the battery module 10 in which the module frame 11 is excluded and an internal cell is exposed is also being used.

Also, (b) of FIG. 1 is a view illustrating the pack case 20 that provides a space, in which the battery module 10 is accommodated, among common battery packs. A lower portion of each battery module 10 is supported by a base plate 21 in a space partitioned by a side wall 22 and a partition wall 23 in the pack case 20 illustrated in (b) of FIG. 1, and thus the battery module 10 is electrically connected to other battery modules 10 in series or parallel.

Meanwhile, an abnormal phenomenon may occur in the battery module included in the battery pack during a charging or discharging process, and one example thereof is a swelling phenomenon. The swelling phenomenon is a phenomenon in which a battery cell expands due to gas generated inside the battery cell. The swelling phenomenon may first progress in each battery cell unit accommodated in the battery module, consequently affecting the battery module. In particular, the swelling phenomenon may progress throughout a central portion of the battery module, that is, the entire module frame. Generally, a portion of the module frame of each battery module accommodated in the pack case is not a particularly fixed portion, and thus when the swelling phenomenon severely occurs, the swelling phenomenon may affect adjacent battery modules.

Thus, there is a need for a novel method capable of minimizing shape deformation of the battery module as much as possible even when the swelling phenomenon occurs in each battery module accommodated in the pack case.

### [Related Art Document]

Korean Patent Application Publication No. 10-2018-0113906
Document DE 10 2018 210126 A1 discloses a battery pack comprising a pack case comprising a base plate, side walls and partition walls.

### [Disclosure]

### [Technical Problem]

Thus, an aspect of the present invention is to provide a structure capable of reinforcing a side surface of a battery module accommodated in a pack case.

Further, another aspect of the present invention is to suppress a swelling phenomenon of the battery module accommodated in a pack case.

### [Technical Solution]

To this end, the invention relates to a battery pack according to claim 1.
The battery pack after the invention may present one or more feature(s) of dependent claims 2 to 15 in any combination allowed by the claims.[Advantageous Effects]

According to the present invention, a swelling phenomenon of a battery module accommodated in a pack case can be suppressed.

Further, the present invention can improve the assembly efficiency of a pack case by using a structure capable of dividing a battery module accommodated in the pack case and being freely attached to or detached from the pack case.

### [Brief Description of the Drawings]

FIG. 1 illustrates a battery module and a pack case according to a related art.
FIG. 2 is a perspective view of a pack case included in a battery pack according to a first embodiment of the present invention.
FIG. 3 illustrates a state in which a battery module is accommodated in the pack case of FIG. 2.
FIG. 4 illustrates the pack case from which an auxiliary partition wall is detached.
FIG. 5 is a perspective view of the auxiliary partition wall included in the battery pack according to the first embodiment of the present invention.
FIG. 6 illustrates a pair of separated reinforcement plates.
FIG. 7 is a plan view of the pair of reinforcement plates illustrated in FIG. 6.
FIG. 8 illustrates the auxiliary partition wall in which a first reinforcement plate and a second reinforcement plate are coupled.
FIG. 9 illustrates a state in which bolts are inserted into a through hole and an auxiliary coupling hole.
FIG. 10 is a view illustrating a pack case included in a battery pack and a battery module accommodated in the pack case according to a second embodiment of the present invention.
FIG. 11 illustrates a pair of reinforcement plates constituting an auxiliary partition wall included in the battery pack according to the second embodiment of the present invention.
FIG. 12 illustrates the auxiliary partition wall in which a first reinforcement plate and a second reinforcement plate are coupled.
FIG. 13 illustrates a state in which bolts are inserted into a reinforcement hole and an auxiliary coupling hole.

### [Detailed Description of the Preferred Embodiments]

Hereinafter, exemplary embodiments of the present invention will be described in detail with reference to the accompanying drawings. Prior to this, terms or words used in the present specification and the appended claims should not be interpreted as being limited to usual or dictionary meanings and should be interpreted as meanings and concepts corresponding to the technical spirit of the present invention according to the principle that the inventor may properly define the concepts of the terms in order to describe his/her own invention in the best way.

Thus, since the embodiments described in the present specification and configurations illustrated in the drawings are merely the most exemplary embodiments of the present invention and do not represent all the technical spirit of the present invention, it should be understood that there may be various equivalents and variations that may replace the embodiments and the configurations at the time of filing the present application.

Further, in description of the present invention, when it is determined that the detailed description of widely known related configurations or functions may obscure the gist of the present invention, the detailed description will be omitted.

Since the embodiments of the present invention are provided to more completely describe the present invention to those skilled in the art, the shapes and sizes of components in the drawings may be exaggerated, omitted, or schematically illustrated for clearer description. Thus, the size or ratio of each component does not entirely reflect the actual size or ratio.

The present invention relates to a battery pack for accommodating a battery module including a cell stack in which a plurality of cells are stacked.

The battery module accommodated in the battery pack of the present invention may include the cell stack and end plates coupled to front and rear sides of the cell stack or may further include a module frame surrounding the side surfaces and the upper and lower surfaces of the cell stack.

The battery pack of the present invention includes a pack case including a module area where the battery module is placed.

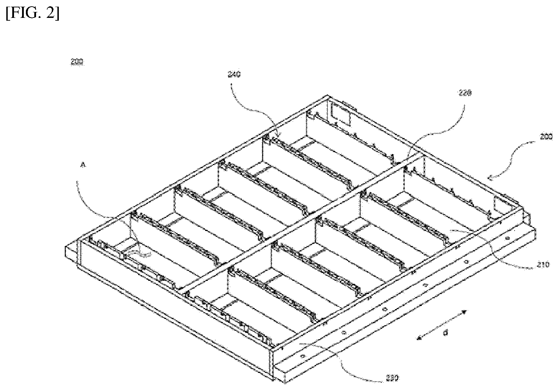

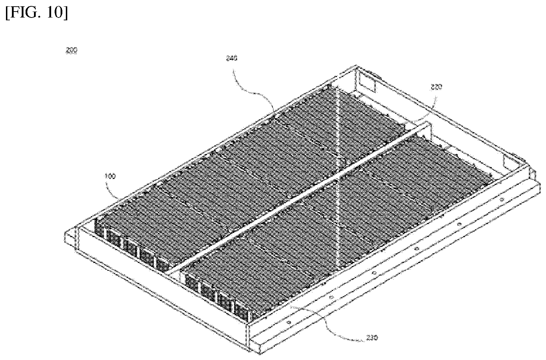

FIGS. 2 to 9 relate to a battery pack according to a first embodiment of the present invention, and FIGS. 10 to 13 relate to a battery pack according to a second embodiment of the present invention.

Hereinafter, each embodiment will be described with reference to the accompanying drawings.

### (First Embodiment)

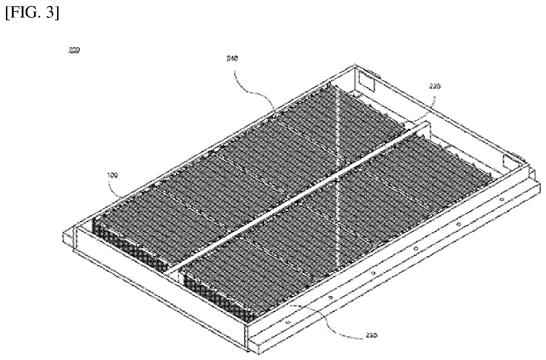

FIG. 2 is a perspective view of a pack case 200 included in the battery pack according to the first embodiment of the present invention, and FIG. 3 illustrates a state in which a battery module 100 is accommodated in the pack case 200 of FIG. 2.

As illustrated in FIGS. 2 and 3, the pack case 200 includes a base plate 210, a main partition wall 220, a side wall 230, and an auxiliary partition wall 240.

The auxiliary partition wall 240 of the present invention is detachably installed on the base plate 210 and the side wall 230 of the pack case 200.

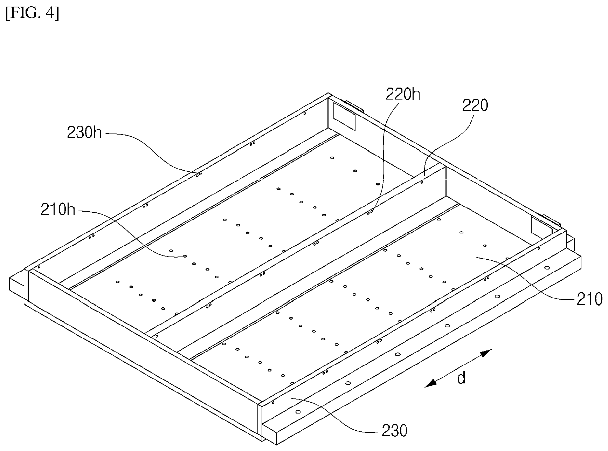

FIG. 4 illustrates the pack case 200 from which the auxiliary partition wall 240 is detached.

According to FIGS. 2 to 4, the base plate 210 corresponds to a bottom of the pack case 200 and serves to support a lower portion of the battery module 100 mounted thereon.

A coupling groove 210h may be formed in the base plate 210 so that a bolt B may inserted into and screw-coupled to the coupling groove 210h.

The main partition wall 220 extends across the base plate 210 and is perpendicularly coupled to a central portion of the base plate 210.

The battery modules 100 seated on both sides of the main partition wall 220 are symmetrical to each other with respect to the main partition wall 220.

The main partition wall 220 may serve to roughly divide an inner space of the pack case 200 into two areas and also serve to protect various conducting wires used inside the pack case 200 by inserting the conducting wires into the main partition wall 220.

The side wall 230 is perpendicularly coupled to an edge of the base plate 210 in a perimeter direction and serves to surround and protect an outer surface of the battery module 100 positioned on the base plate 210.

Auxiliary coupling grooves 220h and 230h may be formed in the main partition wall 220 and the side wall 230 so that the bolts B are inserted into and screw-coupled to the auxiliary coupling grooves 220h and 230h.

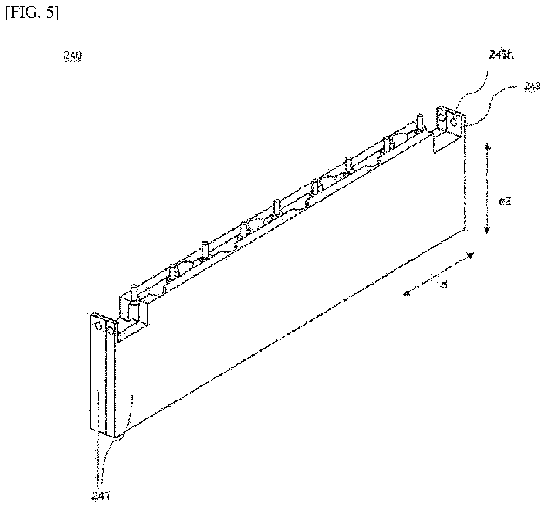

FIG. 5 is a perspective view of the auxiliary partition wall 240 included in the battery pack according to the first embodiment of the present invention.

As illustrated in FIG. 2, both ends of the auxiliary partition wall 240 are coupled to the main partition wall 220 and the side wall 230.

The auxiliary partition walls 240 are installed on both sides of the main partition wall 220 to be spaced a predetermined distance from each other in a longitudinal direction d of the main partition wall 220, and one auxiliary partition wall 240 is adjacent to two module areas A on both sides thereof.

An interval between the auxiliary partition walls 240 may be approximately the same as a width of the battery module 100 being used. That is, both sides of the battery module 100 accommodated in the module area A may be inserted such that both sides thereof are in close contact with the auxiliary partition walls 240. Thus, both sides of the battery module 100 inserted into the module area A may be supported by the auxiliary partition walls 240.

As illustrated in FIG. 5, the auxiliary partition wall 240 includes a pair of reinforcement plates 241 coupled to each other, and the pair of reinforcement plates 241 are formed in a structure in which one sides, which face each other, of the reinforcement plates 241 are engaged.

In detail, the reinforcement plate 241 includes a plurality of reinforcement ribs 2411 protruding from one side thereof and extending in the longitudinal direction d of the reinforcement plate 241, and when each of the reinforcement ribs 2411 is engaged with the reinforcement rib 2411 of the facing reinforcement plate 241, the pair of reinforcement plates 241 are coupled to each other to constitute the auxiliary partition wall 240.

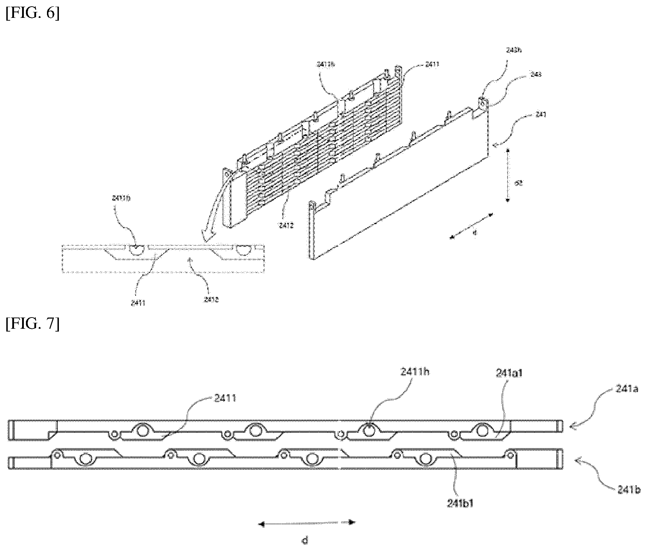

FIG. 6 illustrates a pair of separated reinforcement plates 241.

The reinforcement rib 2411 may have a trapezoidal shape having slopes formed on both sides thereof or a parabolic shape (not illustrated).

Referring to FIG. 6, the reinforcement ribs 2411 are spaced a predetermined distance from each other in the longitudinal direction d of the reinforcement plate 241.

The reinforcement plate 241 includes reinforcement grooves 2412 formed in a curved shape by inclined surfaces of the reinforcement ribs 2411 between the reinforcement ribs 2411 arranged adjacent to each other in the longitudinal direction d. In this case, the reinforcement grooves 2412 may have the same shape as the reinforcement ribs 2411 so that the reinforcement ribs 2411 may be engaged with and inserted into the reinforcement grooves 2412. For example, when the reinforcement ribs 2411 have a trapezoidal shape, the reinforcement grooves 2412 also have a trapezoidal shape.

The reinforcement ribs 2411 and the reinforcement grooves 2412 may be alternately formed in the longitudinal direction d of the reinforcement plate 241.

Further, as illustrated in FIG. 6, the reinforcement ribs 2411 are spaced a predetermined distance from each other in a height direction d2 of the reinforcement plate 241.

FIG. 7 is a plan view of the pair of reinforcement plates 241 illustrated in FIG. 6.

As illustrated in FIG. 7, the auxiliary partition wall 240 of the present invention includes a first reinforcement plate 241a positioned on one side thereof and a second reinforcement plate 241b positioned to face the first reinforcement plate 241a.

The reinforcement ribs 2411 formed on the first reinforcement plate 241a and the second reinforcement plate 241b are formed at heights that are symmetrical to each other in the height direction d2 of the reinforcement plate 241 but are formed at positions misaligned from each other in the longitudinal direction d of the reinforcement plate 241. For example, a reinforcement rib 241a1 of the first reinforcement plate 241a and the reinforcement groove 2412 of the second reinforcement plate 241b are positioned to face each other. Thus, in the auxiliary partition wall 240 of the present invention formed by coupling the first reinforcement plate 241a and the second reinforcement plate 241b, the reinforcement rib 241a1 and the reinforcement groove of 2412 of the first reinforcement plate 241a are engaged with the reinforcement groove 2412 and a reinforcement rib 241b1 of the second reinforcement plate 241b.

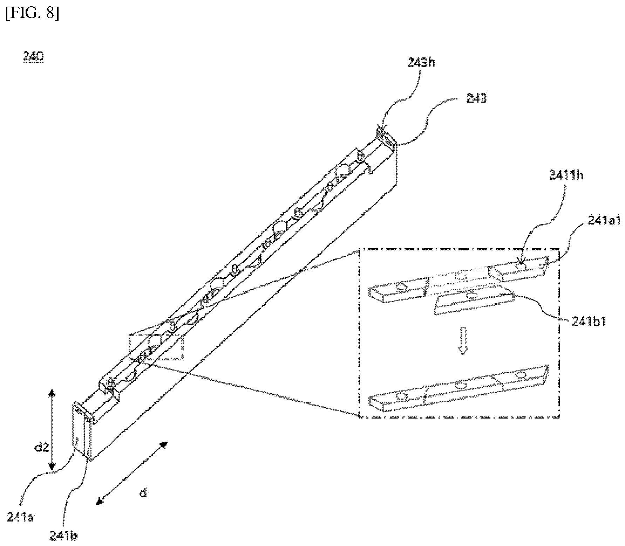

FIG. 8 illustrates the auxiliary partition wall 240 in which the first reinforcement plate 241a and the second reinforcement plate 241b are coupled to each other. Referring to FIG. 8, the first reinforcement plate 241a is coupled to the second reinforcement plate 241b so that the reinforcement rib 241a1 is inserted into the reinforcement groove 2412 of the second reinforcement plate 241b at a corresponding position, and the second reinforcement plate 241b is coupled to the first reinforcement plate 241a so that the reinforcement rib 241b1 is inserted into the reinforcement groove 2412 of the first reinforcement plate 241a at a corresponding position.

In this case, the reinforcement ribs 2411 coupled to be misaligned with each other form a strip shape extending in the longitudinal direction d of the reinforcement plate 241. That is, inclined surfaces of the reinforcement ribs 2411, which are engaged with each other in a symmetrical shape, are in contact with each other to coincide with each other, to form one strip shape. Thus, a plurality of strips formed by coupling the reinforcement ribs 2411 in the height direction d2 of the reinforcement plate 241 may be formed in one auxiliary partition wall 240.

Due to the above structure, as illustrated in FIG. 3, a side surface of the battery module 100 accommodated in the battery pack of the present invention may be firmly supported by the reinforcement ribs 2411 forming one strip shape.

As illustrated in FIGS. 6 to 8, the reinforcement plate 241 included in the battery pack according to the first embodiment of the present invention includes through holes 2411h perforated to perpendicularly pass through the reinforcement ribs 2411.

The through holes 2411h are formed at the same position in the reinforcement ribs 2411. For example, the through holes 2411h included in the reinforcement ribs 2411 formed in the height direction d2 of the reinforcement plate 241 at the same position in the longitudinal direction d of the reinforcement plate 241 are formed at positions corresponding to each other.

One bolt B may be inserted into each of the through holes 2411h formed at the same position in the longitudinal direction d of the reinforcement plate 241, and the reinforcement plate 241 may be screw-coupled to the bolt B inserted into the through hole 2411h.

The side surface of the battery module 100 accommodated in the module area A of the battery pack of the present invention may be primarily supported by the reinforcement plate 241 included in the auxiliary partition wall 240, and the side surface of the battery module 100 may be triply supported by the reinforcement ribs 2411 formed in the reinforcement plate 241 and the bolt B inserted into the through hole 2411h of the reinforcement rib 2411.

As illustrated in FIGS. 6 and 8, the reinforcement plate 241 includes protrusions 243 that protrude upward from both ends thereof and includes auxiliary coupling holes 243h perforated to pass through the protrusions 243 in a horizontal direction.

The bolt B may be inserted into the auxiliary coupling hole 243h, and the reinforcement plate 241 may be screw-coupled to the bolt B inserted into the auxiliary coupling hole 243h.

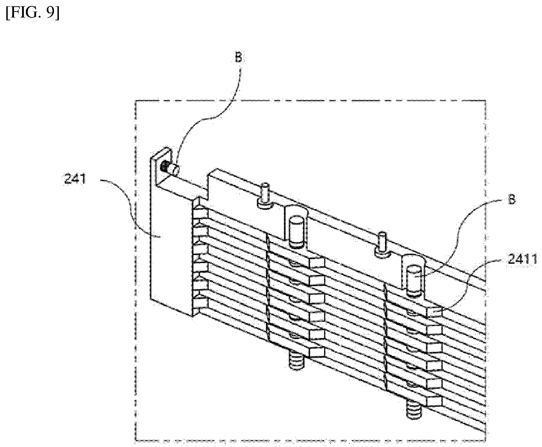

FIG. 9 illustrates a state in which the bolt B is inserted into each of the through hole 2411h and the auxiliary coupling hole 243h of the one reinforcement plate 241. (However, for convenience, a detailed structure such as the thread of the bolt B is omitted.)

Referring to FIG. 9, one bolt B is inserted into and coupled to the through hole 2411h of each of the reinforcement ribs 2411 formed at the same position in the longitudinal direction d of the reinforcement plate 241.

Further, another bolt B is inserted into and coupled to, in the horizontal direction, the auxiliary coupling hole 243h formed at an end of the reinforcement plate 241.

The battery module 100 of the present invention may be fixed to the pack case 200 included in the battery pack by the bolts B inserted into and coupled to the through hole 2411h and the auxiliary coupling hole 243h.

In this detail, the auxiliary partition wall 240 may be fixedly coupled to the base plate 210 by a bolt B that perpendicularly passes through the through hole 2411h and is inserted into the coupling groove 210h of the base plate 210. The bolt B may be inserted into and coupled to each of the plurality of through holes 2411h spaced a predetermined distance from each other in the longitudinal direction d of the reinforcement plate 241.

The bolt B inserted into the through hole 2411h allows the pair of reinforcement plates 241 constituting the auxiliary partition wall 240 to be fixed to the base plate 210. Thus, even when gas is generated inside the battery module 100 accommodated in the module area A between the auxiliary partition walls 240, a swelling phenomenon in which the battery module 100 expands can be suppressed by the bolts B perpendicularly disposed along the side surface of the battery module 100 and the auxiliary partition walls 240 coupled to the base plate 210 by the bolts B.

The auxiliary partition walls 240 may be installed such that the auxiliary coupling holes 243h of the reinforcement plates 241 correspond to the auxiliary coupling grooves 220h and 230h of the side wall 230 and the main partition wall 220. In this case, the auxiliary partition walls 240 may be fixedly coupled to the side wall 230 and the main partition wall 220 by the bolts B that horizontally pass through the auxiliary coupling hole 243h and are inserted into the auxiliary coupling grooves 220h and 230h. Thus, the auxiliary partition walls 240 installed inside the pack case 200 may be fixedly coupled to not only the side wall 230 and the main partition wall 220 but also the base plate 210 to support the battery module 100.

The battery pack of the present invention may further include an upper cover (not illustrated) coupled to the pack case 200 to cover an upper portion of each battery module 100 accommodated in the module area A of the pack case 200.

Since the upper cover corresponds to widely-known technology, a more detailed description thereof will be omitted.

### (Second Embodiment)

FIG. 10 is a view illustrating a pack case 200 included in a battery pack and a battery module 100 accommodated in the pack case 200 according to a second embodiment of the present invention.

The battery pack according to the second embodiment of the present invention differs from the battery pack according to the first embodiment in terms of the structure of the auxiliary partition wall 240. Thus, configurations of the base plate 210, the main partition wall 220, and the side wall 230 are replaced with those according to the first embodiment.

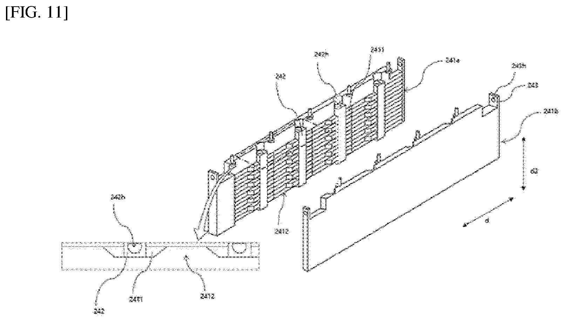

FIG. 11 illustrates a pair of reinforcement plates 241 constituting the auxiliary partition wall 240 included in the battery pack according to the second embodiment of the present invention.

The auxiliary partition wall 240 has a structure in which the pair of arranged reinforcement plates 241 are coupled to each other.

Like the auxiliary partition wall 240 of the battery pack according to the first embodiment, both ends of the auxiliary partition wall 240 are coupled to the main partition wall 220 and the side wall 230.

As illustrated in FIG. 11, the auxiliary partition wall 240 includes a pair of reinforcement plates 241, and one sides, which face each other, of the pair of reinforcement plates 241 are formed in a structure in which the reinforcement plates 241 are engaged.

In detail, the reinforcement plate 241 includes a plurality of reinforcement ribs 2411 protruding from one side thereof and extending in the longitudinal direction d of the reinforcement plate 241, and as each of the reinforcement ribs 2411 is engaged with the reinforcement rib 2411 of the facing reinforcement plate 241, the pair of reinforcement plates 241 are coupled to each other to constitute the auxiliary partition wall 240.

The reinforcement rib 2411 may have a trapezoidal shape having slopes formed on both sides thereof or a parabolic shape (not illustrated).

Referring to FIG. 11, the reinforcement ribs 2411 are spaced a predetermined distance from each other in the longitudinal direction d of the reinforcement plate 241.

The reinforcement plate 241 includes reinforcement grooves 2412 formed in a curved shape by the inclined surfaces of the reinforcement ribs 2411 between the reinforcement ribs 2411 arranged adjacent to each other in the longitudinal direction d. In this case, the reinforcement grooves 2412 may have the same shape as the reinforcement ribs 2411 so that the reinforcement ribs 2411 may be engaged with and inserted into the reinforcement grooves 2412. For example, when the reinforcement ribs 2411 have a trapezoidal shape, the reinforcement grooves 2412 also have a trapezoidal shape.

The reinforcement ribs 2411 and the reinforcement grooves 2412 may be alternately formed in the longitudinal direction d of the reinforcement plate 241.

Further, as illustrated in FIG. 11, the reinforcement ribs 2411 are spaced a predetermined distance from each other in the height direction d2 of the reinforcement plate 241.

The reinforcement plate 241 constituting the auxiliary partition wall 240 includes a first reinforcement plate 241a positioned on one side thereof and a second reinforcement plate 241b facing the first reinforcement plate 241a and coupled to the first reinforcement plate 241a.

The reinforcement ribs 2411 formed on the first reinforcement plate 241a and the second reinforcement plate 241b are formed at heights that are symmetrical to each other in the height direction d2 of the reinforcement plate 241 but are formed at positions misaligned from each other in the longitudinal direction d of the reinforcement plate 241. For example, the reinforcement rib 241a1 of the first reinforcement plate 241a and the reinforcement groove 2412 of the second reinforcement plate 241b are positioned to be symmetrical to each other.

As illustrated in FIG. 11, the auxiliary partition wall 240 included in the battery pack according to the second embodiment of the present invention further includes reinforcement bars 242 that extend perpendicularly through the reinforcement ribs 2411.

The reinforcement bars 242 are formed on the reinforcement plate 241 to be spaced a predetermined distance from each other in the longitudinal direction d of the reinforcement plate 241. The reinforcement bars 242 may be formed at the same positions as the reinforcement ribs 2411.

The reinforcement bar 242 includes a perpendicularly perforated reinforcement hole 242h.

One bolt B may be inserted into the reinforcement hole 242h of the reinforcement bar 242, and the reinforcement plate 241 may be screw-coupled to the bolt B inserted into the reinforcement hole 242h. Thus, the battery module 100 accommodated in the battery pack of the present invention may be primarily supported by the reinforcement plate 241 and may be quadruply supported by the reinforcement ribs 2411 formed on the reinforcement plate 241, the perpendicularly extending reinforcement bars 242, and the bolts B inserted into the reinforcement holes 242h of the reinforcement bars 242.

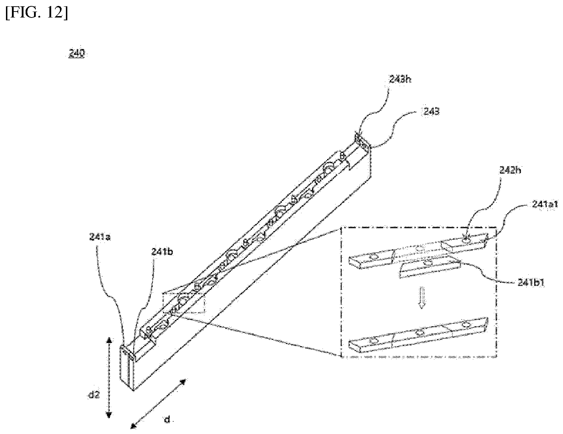

FIG. 12 illustrates the auxiliary partition wall 240 in which the first reinforcement plate 241a and the second reinforcement plate 241b are coupled to each other. According to FIG. 12, the first reinforcement plate 241a is coupled to the second reinforcement plate 241b so that the reinforcement rib 241a1 is inserted into the reinforcement groove 2412 of the second reinforcement plate 241b at a corresponding position, and the second reinforcement plate 241b is coupled to the first reinforcement plate 241a so that the reinforcement rib 241b1 is inserted into the reinforcement groove 2412 of the first reinforcement plate 241a at a corresponding position.

In this case, the reinforcement ribs 2411 coupled to be misaligned with each other form a strip shape extending in the longitudinal direction d of the reinforcement plate 241. That is, the inclined surfaces of the reinforcement ribs 2411, which are engaged with each other in a symmetrical shape, are in contact with each other to coincide with each other, to form one strip shape. Thus, a plurality of strips formed by coupling the reinforcement ribs 2411 in the height direction d2 of the reinforcement plate 241 may be formed in one auxiliary partition wall 240.

Due to the structure described above, the battery module 100 accommodated in the battery pack of the present invention can be firmly supported by the reinforcement ribs 2411 forming the one strip shape and the reinforcement bars 242 perpendicularly formed to intersect the plurality of reinforcement ribs 2411 forming the strip shape in the longitudinal direction d of the reinforcement plate 241.

As illustrated in FIGS. 11 and 12, the reinforcement plate 241 includes protrusions 243 that protrude upward from both ends thereof and includes auxiliary coupling holes 243h perforated to pass through the protrusions 243 in the horizontal direction.

The bolt B may be inserted into the auxiliary coupling hole 243h, and the reinforcement plate 241 may be screw-coupled to the bolt B inserted into the auxiliary coupling hole 243h.

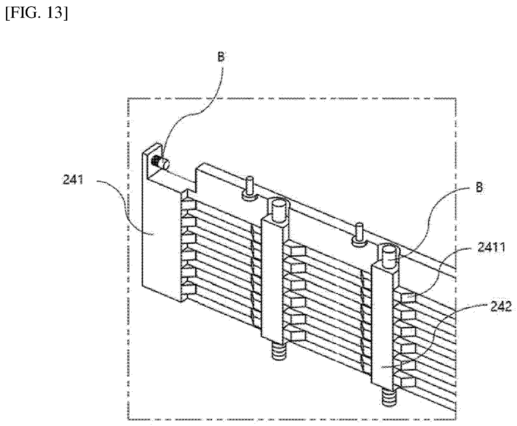

FIG. 13 illustrates a state in which the bolt B is inserted into each of the reinforcement hole 242h and the auxiliary coupling hole 243h of the one reinforcement plate 241. (However, for convenience, a detailed structure such as the thread of the bolt B is omitted.)

Referring to FIG. 13, one bolt B is inserted into and coupled to the reinforcement hole 242h of each of the reinforcement bars 242 formed at the same position in the longitudinal direction d of the reinforcement plate 241.

Further, another bolt B is inserted into and coupled to, in the horizontal direction, the auxiliary coupling hole 243h formed at the end of the reinforcement plate 241.

The battery module 100 of the present invention may be fixed to the pack case 200 included in the battery pack by the bolts B inserted into and coupled to the reinforcement hole 242h and the auxiliary coupling hole 243h.

In detail, the auxiliary partition wall 240 may be fixedly coupled to the base plate 210 by a bolt B that perpendicularly passes through the reinforcement hole 242h and is inserted into the coupling groove 210h of the base plate 210. The bolt B may be inserted into and coupled to each of the plurality of reinforcement holes 242h spaced a predetermined distance from each other in the longitudinal direction d of the reinforcement plate 241.

The bolt B inserted into the reinforcement hole 242h allows the pair of reinforcement plates 241 constituting the auxiliary partition wall 240 to be fixed to the base plate 210. Thus, even when gas is generated inside the battery module 100 accommodated in the module area A between the auxiliary partition walls 240, the swelling phenomenon in which the battery module 100 expands can be suppressed by the bolts B perpendicularly disposed along the side surface of the battery module 100 and the auxiliary partition walls 240 coupled to the base plate 210 by the bolt B.

The auxiliary partition walls 240 may be installed such that the auxiliary coupling holes 243h of the reinforcement plates 241 correspond to the auxiliary coupling grooves 220h and 230h of the side wall 230 and the main partition wall 220. In this case, the auxiliary partition walls 240 may be fixedly coupled to the side wall 230 and the main partition wall 220 by the bolts B that horizontally pass through the auxiliary coupling hole 243h and are inserted into the auxiliary coupling grooves 220h and 230h. Thus, the auxiliary partition walls 240 installed inside the pack case 200 may be fixedly coupled to not only the side wall 230 and the main partition wall 220 but also the base plate 210 to support the battery module 100.

The battery pack of the present invention may further include an upper cover (not illustrated) coupled to the pack case 200 to cover an upper portion of each battery module 100 accommodated in the module area A of the pack case 200.

Since the upper cover corresponds to widely-known technology, a more detailed description thereof will be omitted.

### [Description of Reference Numerals]

10: (Related Art) Battery module
11: (Related Art) Module frame
12: (Related Art) End plate
20: (Related Art) Pack case
21: (Related Art) Base plate
22: (Related Art) Side wall
23: (Related Art) Partition wall
100: Battery module
200: Pack case
210: Base plate
210h: Coupling groove
220: Main partition wall
230: Side wall
220h, 230h: Auxiliary coupling groove
240: Auxiliary partition wall
241: Reinforcement plate
241a: First reinforcement plate
241a1: Reinforcement rib of first reinforcement plate
241b: Second reinforcement plate
241b1: Reinforcement rib of second reinforcement plate
2411: Reinforcement rib
2411h: Through hole
2412: Reinforcement groove
242: Reinforcement bar
242h: Reinforcement hole
243: Protrusion
243h: Auxiliary coupling hole
A: Module area
B: Bolt
d: Longitudinal direction of reinforcement plate
d2: Height direction of reinforcement plate

## Claims

1. A battery pack for accommodating a battery module (100) including a cell stack in which a plurality of cells are stacked, the battery pack comprising:
a pack case (200) including a module area where the battery module (100) is placed,
wherein the pack case (200) includes:
a base plate (210) configured to support a lower portion of the battery module (100);
a main partition wall (220) extending across the base plate (210) and perpendicularly coupled to a central portion of the base plate (210);
a side wall (230) perpendicularly coupled to an edge of the base plate (210) along a perimeter of the base plate (210); and
an auxiliary partition wall (240) of which opposite ends are coupled to the main partition wall (220) and the side wall (230), respectively,
**characterized in that** the auxiliary partition wall (240) includes a pair of reinforcement plates (241) coupled to each other, and
wherein a reinforcement plate (241) of the pair of reinforcement plates (241) includes a plurality of reinforcement ribs (2411) protruding and extending in a longitudinal direction of the reinforcement plate (241).

2. The battery pack of claim 1, wherein the plurality of reinforcement ribs (2411) are spaced at a predetermined distance from each other in the longitudinal direction of the reinforcement plate (241).

3. The battery pack of claim 2, wherein the reinforcement plate (241) includes a reinforcement groove (2412) having a recessed shape between a pair of reinforcement ribs (2411) spaced apart from each other in the longitudinal direction of the reinforcement plate (241) from among the plurality of reinforcement ribs (2411).

4. The battery pack of claim 3, wherein a shape of the reinforcement groove (2412) is the same as a shape of a reinforcement rib (2411) from among the pair of reinforcement ribs (2411) so that the reinforcement rib (2411) is engaged with and inserted into the reinforcement groove (2412).

5. The battery pack of claim 4, wherein the reinforcement rib (2411) and the reinforcement groove (2412) are alternately provided in a longitudinal direction of the auxiliary partition wall (240).

6. The battery pack of claim 1, wherein the plurality of reinforcement ribs (2411) have at least one of a trapezoidal shape and a parabolic shape.

7. The battery pack of claim 1, wherein the plurality of reinforcement ribs (2411) are spaced at a predetermined distance from each other in a height direction of the pair of reinforcement plates (241).

8. The battery pack of claim 7, wherein the auxiliary partition wall (240) includes:
a first reinforcement plate (241a) of the pair of reinforcement plates (241), and having a reinforcement rib -2411a) formed on one side thereof from among the plurality of reinforcement ribs (2411); and
a second reinforcement plate (241b) of the pair of reinforcement plates, and having a reinforcement rib (2411b) formed on one side thereof facing the first reinforcement plate (241a) from among the plurality of reinforcement ribs (2411), and
wherein the reinforcement ribs (2411a, 2411b) included in the first reinforcement plate (241a) and the second reinforcement plate (241b) are formed at heights corresponding to each other.

9. The battery pack of claim 8, wherein each of the first reinforcement plate (241a) and the second reinforcement plate (241b) includes a reinforcement groove (2412) having a recessed shape between a pair of reinforcement ribs (2411) spaced apart from each other in the longitudinal direction of the first or second reinforcement plate (241a, 241b) from among the plurality of reinforcement ribs (2411), and
wherein the reinforcement rib (2411a) and the reinforcement groove (2412) of the first reinforcement plate (241a) are engaged with and coupled to the reinforcement groove (2412) and the reinforcement rib (2411b) of the second reinforcement plate (241b).

10. The battery pack of claim 8, wherein the first reinforcement plate (241a) is coupled to the second reinforcement plate (241b) so that the reinforcement rib (2411a) of the first reinforcement plate (241a) is inserted into the reinforcement groove (2412) of the second reinforcement plate (241b) at a corresponding position, and
wherein the second reinforcement plate (241b) is coupled to the first reinforcement plate (241a) so that the reinforcement rib (2411b) of the second reinforcement plate (241b) is inserted into the reinforcement groove (2412) of the first reinforcement plate (241a) at a corresponding position.

11. The battery pack of claim 1, wherein the reinforcement plate (241) includes a through hole (2411h) perforated to perpendicularly pass through a reinforcement rib (2411) from among the plurality of reinforcement ribs (2411).

12. The battery pack of claim 11, wherein the pack case (200) further includes a coupling groove (210h) formed at a bottom of the module area to correspond to a position of the through hole (2411h), and
wherein the auxiliary partition wall (240) is coupled to the pack case (200) by a bolt (B) passing through the through hole (2411h) and inserted into the coupling groove (210h).

13. The battery pack of claim 1, wherein the reinforcement plate (241) further includes a reinforcement bar (242) extending perpendicularly through a reinforcement rib (2411) from among the plurality of reinforcement ribs (2411), and
wherein the reinforcement bar (242) includes a reinforcement hole (242h) perforated to perpendicularly pass through the reinforcement bar (242).

14. The battery pack of claim 13, wherein the pack case (200) includes a coupling groove (210h) formed at a bottom of the module area to correspond to a position of the reinforcement hole (242h), and
wherein the auxiliary partition wall (240) is coupled to the pack case (200) by a bolt (B) passing through the reinforcement hole (242h) and inserted into the coupling groove (210h).

15. The battery pack of claim 1, wherein the reinforcement plate (240) includes auxiliary coupling holes (243h) perforated to pass through opposite ends of the reinforcement plate (241) in a horizontal direction,
wherein each of the side wall (230) and the main partition wall (220) includes an auxiliary coupling groove (220h, 230h) formed to correspond to a position of an auxiliary coupling hole (243h) of the auxiliary coupling holes (243h) of the auxiliary partition wall (240), and
wherein the auxiliary partition wall (240) is coupled to the pack case (200) by a bolt (B) passing through the auxiliary coupling hole (243h) and inserted into the auxiliary coupling groove (220h, 230h).

## Patentansprüche

1. Batteriepack zum Aufnehmen eines Batteriemoduls (100), welches einen Zellenstapel umfasst, in welchem eine Mehrzahl von Zellen gestapelt sind, wobei der Batteriepack umfasst:
ein Packgehäuse (200), welches einen Modulbereich umfasst, in welchem das Batteriemodul (100) platziert ist,
wobei das Packgehäuse (200) umfasst:
eine Basisplatte (210), welche dazu eingerichtet ist, einen unteren Abschnitt des Batteriemoduls (100) zu tragen;
eine Haupttrennwand (220), welche sich über die Basisplatte (210) erstreckt und senkrecht mit einem mittleren Abschnitt der Basisplatte (210) gekoppelt ist;
eine Seitenwand (230), welche entlang eines Umfangs der Basisplatte (210) senkrecht mit einem Rand der Basisplatte (210) gekoppelt ist; und
eine Hilfstrennwand (240), von welcher entgegengesetzte Enden mit der Haupttrennwand (220) bzw. der Seitenwand (230) gekoppelt sind,
**dadurch gekennzeichnet, dass** die Hilfstrennwand (240) ein Paar von Verstärkungsplatten (241) umfasst, welche miteinander gekoppelt sind, und
wobei eine Verstärkungsplatte (241) des Paars von Verstärkungsplatten (241) eine Mehrzahl von Verstärkungsrippen (2411) umfasst, welche in einer longitudinalen Richtung der Verstärkungsplatte (241) vorstehen und sich in der longitudinalen Richtung der Verstärkungsplatte (241) erstrecken.

2. Batteriepack nach Anspruch 1, wobei die Mehrzahl von Verstärkungsrippen (2411) in der longitudinalen Richtung der Verstärkungsplatte (241) in einem vorbestimmten Abstand voneinander beabstandet ist.

3. Batteriepack nach Anspruch 2, wobei die Verstärkungsplatte (241) zwischen einem Paar von Verstärkungsrippen (2411), welche in der longitudinalen Richtung der Verstärkungsplatte (241) voneinander beabstandet sind, aus der Mehrzahl von Verstärkungsrippen (2411) eine Verstärkungsnut (2412) umfasst, welche eine vertiefte Form aufweist.

4. Batteriepack nach Anspruch 3, wobei eine Form der Verstärkungsnut (2412) die gleiche ist wie eine Form einer Verstärkungsrippe (2411) aus dem Paar von Verstärkungsrippen (2411), so dass die Verstärkungsrippe (2411) mit der Verstärkungsnut (2412) in Eingriff gebracht ist und darin eingeführt ist.

5. Batteriepack nach Anspruch 4, wobei die Verstärkungsrippe (2411) und die Verstärkungsnut (2412) in einer longitudinalen Richtung der Hilfstrennwand (240) abwechselnd bereitgestellt sind.

6. Batteriepack nach Anspruch 1, wobei die Mehrzahl von Verstärkungsrippen (2411) wenigstens eines aus einer trapezförmigen Form und einer parabolischen Form aufweist.

7. Batteriepack nach Anspruch 1, wobei die Mehrzahl von Verstärkungsrippen (2411) in einer Höhenrichtung des Paars von Verstärkungsplatten (241) in einem vorbestimmten Abstand voneinander beabstandet ist.

8. Batteriepack nach Anspruch 7, wobei die Hilfstrennwand (240) umfasst:
eine erste Verstärkungsplatte (241a) des Paars von Verstärkungsplatten (241), welche unter der Mehrzahl von Verstärkungsrippen (2411) eine Verstärkungsrippe (2411a) aufweist, die an einer Seite davon gebildet ist; und
eine zweite Verstärkungsplatte (241b) des Paars von Verstärkungsplatten, welche unter der Mehrzahl von Verstärkungsrippen (2411) eine Verstärkungsrippe (2411b) aufweist, die an einer Seite davon gebildet ist, welche der ersten Verstärkungsplatte (241a) zugewandt ist, und
wobei die Verstärkungsrippen (2411a, 2411b), welche in der ersten Verstärkungsplatte (241a) und der zweiten Verstärkungsplatte (241b) umfasst sind, in Höhen gebildet sind, welche einander entsprechen.

9. Batteriepack nach Anspruch 8, wobei jede aus der ersten Verstärkungsplatte (241a) und der zweiten Verstärkungsplatte (241b) zwischen einem Paar von Verstärkungsrippen (2411), welche in der longitudinalen Richtung der ersten oder der zweiten Verstärkungsplatte (241a, 241b) voneinander beabstandet sind, aus der Mehrzahl von Verstärkungsrippen (2411) eine Verstärkungsnut (2412) umfasst, welche eine vertiefte Form aufweist, und
wobei die Verstärkungsrippe (2411a) und die Verstärkungsnut (2412) der ersten Verstärkungsplatte (241a) mit der Verstärkungsnut (2412) und der Verstärkungsrippe (2411b) der zweiten Verstärkungsplatte (241b) in Eingriff gebracht sind und damit gekoppelt sind.

10. Batteriepack nach Anspruch 8, wobei die erste Verstärkungsplatte (241a) derart mit der zweiten Verstärkungsplatte (241b) gekoppelt ist, dass die Verstärkungsrippe (2411a) der ersten Verstärkungsplatte (241a) an einer entsprechenden Position in die Verstärkungsnut (2412) der zweiten Verstärkungsplatte (241b) eingeführt ist, und
wobei die zweite Verstärkungsplatte (241b) derart mit der ersten Verstärkungsplatte (241a) gekoppelt ist, dass die Verstärkungsrippe (2411b) der zweiten Verstärkungsplatte (241b) an einer entsprechenden Position in die Verstärkungsnut (2412) der ersten Verstärkungsplatte (241a) eingeführt ist.

11. Batteriepack nach Anspruch 1, wobei die Verstärkungsplatte (241) ein Durchgangsloch (2411h) umfasst, welches derart perforiert ist, dass es senkrecht durch eine Verstärkungsrippe (2411) aus der Mehrzahl von Verstärkungsrippen (2411) verläuft.

12. Batteriepack nach Anspruch 11, wobei das Packgehäuse (200) ferner eine Kopplungsnut (210h) umfasst, welche derart an einer Unterseite des Modulbereichs gebildet ist, dass sie einer Position des Durchgangslochs (2411h) entspricht, und
wobei die Hilfstrennwand (240) durch einen Bolzen (B), welcher durch das Durchgangsloch (2411h) verläuft und in die Kopplungsnut (210h) eingeführt ist, mit dem Packgehäuse (200) gekoppelt ist.

13. Batteriepack nach Anspruch 1, wobei die Verstärkungsplatte (241) ferner eine Verstärkungsstange (242) umfasst, welche sich senkrecht durch eine Verstärkungsrippe (2411) aus der Mehrzahl von Verstärkungsrippen (2411) erstreckt, und
wobei die Verstärkungsstange (242) ein Verstärkungsloch (242h) umfasst, welches derart perforiert ist, dass es senkrecht durch die Verstärkungsstange (242) verläuft.

14. Batteriepack nach Anspruch 13, wobei das Packgehäuse (200) eine Kopplungsnut (210h) umfasst, welche derart an einer Unterseite des Modulbereichs gebildet ist, dass sie einer Position des Verstärkungslochs (242h) entspricht, und
wobei die Hilfstrennwand (240) durch einen Bolzen (B), welcher durch das Verstärkungsloch (242h) verläuft und in die Kopplungsnut (210h) eingeführt ist, mit dem Packgehäuse (200) gekoppelt ist.

15. Batteriepack nach Anspruch 1, wobei die Verstärkungsplatte (240) Hilfskopplungslöcher (243h) umfasst, welche derart perforiert sind, dass sie in einer horizontalen Richtung durch entgegengesetzte Enden der Verstärkungsplatte (241) verlaufen,
wobei jede aus der Seitenwand (230) und der Haupttrennwand (220) eine Hilfskopplungsnut (220h, 230h) umfasst, welche derart gebildet ist, dass sie einer Position eines Hilfskopplungslochs (243h) der Hilfskopplungslöcher (243h) der Hilfstrennwand (240) entspricht, und
wobei die Hilfstrennwand (240) durch einen Bolzen (B), welcher durch das Hilfskopplungsloch (243h) verläuft und in die Hilfskopplungsnut (220h, 230h) eingeführt ist, mit dem Packgehäuse (200) gekoppelt ist.

## Revendications

1. Bloc-batterie destiné à accueillir un module de batterie (100) comportant un empilement d'éléments dans lequel une pluralité d'éléments sont empilés, le bloc-batterie comprenant :
un boîtier de bloc (200) comportant une zone de module où le module de batterie (100) est placé, dans lequel le boîtier de bloc (200) comporte :
une plaque de base (210) configurée pour supporter une partie inférieure du module de batterie (100) ;
une paroi de séparation principale (220) s'étendant à travers la plaque de base (210) et couplée perpendiculairement à une partie centrale de la plaque de base (210) ;
une paroi latérale (230) couplée perpendiculairement à un bord de la plaque de base (210) le long d'un périmètre de la plaque de base (210) ; et
une paroi de séparation auxiliaire (240) dont les extrémités opposées sont couplées respectivement à la paroi de séparation principale (220) et à la paroi latérale (230),
**caractérisé en ce que** la paroi de séparation auxiliaire (240) comporte une paire de plaques de renfort (241) couplées les unes aux autres, et
dans lequel une plaque de renfort (241) de la paire de plaques de renfort (241) comporte une pluralité de nervures de renfort (2411) faisant saillie et s'étendant dans une direction longitudinale de la plaque de renfort (241).

2. Bloc-batterie selon la revendication 1, dans lequel la pluralité de nervures de renfort (2411) sont espacées les unes des autres à une distance prédéterminée dans la direction longitudinale de la plaque de renfort (241).

3. Bloc-batterie selon la revendication 2, dans lequel la plaque de renfort (241) comporte une rainure de renfort (2412) présentant une forme en retrait entre une paire de nervures de renfort (2411) espacées l'une de l'autre dans la direction longitudinale de la plaque de renfort (241) parmi la pluralité de nervures de renfort (2411).

4. Bloc-batterie selon la revendication 3, dans lequel une forme de la rainure de renfort (2412) est identique à une forme d'une nervure de renfort (2411) parmi la paire de nervures de renfort (2411) de sorte que la nervure de renfort (2411) vienne en prise avec la rainure de renfort (2412) et soit insérée dans celle-ci.

5. Bloc-batterie selon la revendication 4, dans lequel la nervure de renfort (2411) et la rainure de renfort (2412) sont disposées en alternance dans une direction longitudinale de la paroi de séparation auxiliaire (240).

6. Bloc-batterie selon la revendication 1, dans lequel la pluralité de nervures de renfort (2411) présentent au moins une parmi une forme trapézoïdale et une forme parabolique.

7. Bloc-batterie selon la revendication 1, dans lequel la pluralité de nervures de renfort (2411) sont espacées les unes des autres à une distance prédéterminée dans une direction de hauteur de la paire de plaques de renfort (241).

8. Bloc-batterie selon la revendication 7, dans lequel la paroi de séparation auxiliaire (240) comporte :
une première plaque de renfort (241a) de la paire de plaques de renfort (241), et présentant une nervure de renfort (2411a) formée sur un côté de celle-ci parmi la pluralité de nervures de renfort (2411) ; et
une deuxième plaque de renfort (241b) de la paire de plaques de renfort, et présentant une nervure de renfort (2411b) formée sur un côté de celle-ci en regard de la première plaque de renfort (241a) parmi la pluralité de nervures de renfort (2411), et
dans lequel les nervures de renfort (241 1a, 2411b) incluses dans la première plaque de renfort (241a) et la deuxième plaque de renfort (241b) sont formées à des hauteurs correspondant l'une à l'autre.

9. Bloc-batterie selon la revendication 8, dans lequel chacune de la première plaque de renfort (241a) et de la deuxième plaque de renfort (241b) comporte une rainure de renfort (2412) présentant une forme en retrait entre une paire de nervures de renfort (2411) espacées l'une de l'autre dans la direction longitudinale de la première ou de la deuxième plaque de renfort (241a, 241b) parmi la pluralité de nervures de renfort (2411), et
dans lequel la nervure de renfort (2411a) et la rainure de renfort (2412) de la première plaque de renfort (241a) viennent en prise avec la rainure de renfort (2412) et la nervure de renfort (2411b) de la deuxième plaque de renfort (241b) et sont couplées à celles-ci.

10. Bloc-batterie selon la revendication 8, dans lequel la première plaque de renfort (241a) est couplée à la deuxième plaque de renfort (241b) de sorte que la nervure de renfort (2411a) de la première plaque de renfort (241a) soit insérée dans la rainure de renfort (2412) de la deuxième plaque de renfort (241b) à une position correspondante, et
dans lequel la deuxième plaque de renfort (241b) est couplée à la première plaque de renfort (241a) de sorte que la nervure de renfort (2411b) de la deuxième plaque de renfort (241b) soit insérée dans la rainure de renfort (2412) de la première plaque de renfort (241a) à une position correspondante.

11. Bloc-batterie selon la revendication 1, dans lequel la plaque de renfort (241) comporte un trou traversant (2411h) perforé pour passer perpendiculairement à travers une nervure de renfort (2411) parmi la pluralité de nervures de renfort (2411).

12. Bloc-batterie selon la revendication 11, dans lequel le boîtier de bloc (200) comporte en outre une rainure de couplage (210h) formée au niveau d'un fond de la zone de module pour correspondre à une position du trou traversant (2411h), et
dans lequel la paroi de séparation auxiliaire (240) est couplée au boîtier de bloc (200) par un boulon (B) passant à travers le trou traversant (2411h) et inséré dans la rainure de couplage (210h).

13. Bloc-batterie selon la revendication 1, dans lequel la plaque de renfort (241) comporte en outre une barre de renfort (242) s'étendant perpendiculairement à travers une nervure de renfort (2411) parmi la pluralité de nervures de renfort (2411), et
dans lequel la barre de renfort (242) comporte un trou de renfort (242h) perforé pour passer perpendiculairement à travers la barre de renfort (242).

14. Bloc-batterie selon la revendication 13, dans lequel le boîtier de bloc (200) comporte une rainure de couplage (210h) formée au niveau d'un fond de la zone de module pour correspondre à une position du trou de renfort (242h), et
dans lequel la paroi de séparation auxiliaire (240) est couplée au boîtier de bloc (200) par un boulon (B) passant à travers le trou de renfort (242h) et inséré dans la rainure de couplage (210h).

15. Bloc-batterie selon la revendication 1, dans lequel la plaque de renfort (240) comporte des trous de couplage auxiliaires (243h) perforés pour passer à travers des extrémités opposées de la plaque de renfort (241) dans une direction horizontale,
dans lequel chacune de la paroi latérale (230) et de la paroi de séparation principale (220) comporte une rainure de couplage auxiliaire (220h, 230h) formée pour correspondre à une position d'un trou de couplage auxiliaire (243h) des trous de couplage auxiliaires (243h) de la paroi de séparation auxiliaire (240), et
dans lequel la paroi de séparation auxiliaire (240) est couplée au boîtier de bloc (200) par un boulon (B) passant à travers le trou de couplage auxiliaire (243h) et inséré dans la rainure de couplage auxiliaire (220h, 230h).
